# EUROPÄISCHE PATENTSCHRIFT

(11) **EP 1 619 979 B1**
(45) Veröffentlichungstag und Bekanntmachung des Hinweises auf die Patenterteilung: **26.09.2012**
(21) Anmeldenummer: 04716205.2
(22) Anmeldetag: 02.03.2004
(51) Int. Cl.: A47C 27/06

(54) **POLSTERFEDERELEMENT**
UPHOLSTERY SPRING ELEMENT
ELEMENT RESSORT POUR REMBOURRAGE

(30) Priorität: 28.03.2003 DE 20305160 U; 02.09.2003 DE 20313748 U
(43) Veröffentlichungstag der Anmeldung: 01.02.2006
(73) Patentinhaber: Hartmann, Siegbert, 32584 Löhne (DE)
(72) Erfinder: Hartmann, Siegbert, 32584 Löhne (DE)
(74) Vertreter: Rolf, Gudrun
(86) Internationale Anmeldenummer: PCT/DE2004/000391
(87) Internationale Veröffentlichungsnummer: WO 2004/086915

(56) Entgegenhaltungen:
- US-A- 5 632 473
- US-A- 6 113 082
- PATENT ABSTRACTS OF JAPAN Bd. 1999, Nr. 11, 30. September 1999 (1999-09-30) -& JP 11 159552 A (RIZU CREAT KK), 15. Juni 1999 (1999-06-15) & DATABASE WPI Section PQ, Week 199934 Derwent Publications Ltd., London, GB; Class Q63, AN 1999-401295 & JP 11 159552 A (OTANI KAKO KK) 15. Juni 1999 (1999-06-15)

## Beschreibung

Die Erfindung betrifft ein Polsterfederelement, insbesondere zur Verwendung in Polsterkissen oder Matratzen, mit einem oberen und einem unteren Auflagerteller sowie einem dazwischen angeordneten Federelement.

Es sind Federkerne für Matratzen oder für Polsterkissen von Möbeln bekannt, US 5 632 473 A, die einzelne Federelemente aufweisen, die mit Auflagertellern versehen und gegenseitig verbunden werden. Die einzelnen Federelemente bestehen demnach aus mehreren separaten Bauteilen, die getrennt hergestellt und anschließend arbeitsintensiv zusammengefügt werden müssen.

Ähnliches gilt für andere bekannte Polsterfederelemente, US 6 113 082 A, die aus mehreren einzelnen Federn bestehen, welche zwischen oberen und unteren Gitter-Flächenelementen platziert werden. Die Federn weisen eine taillierte Kontur zwischen oberen und unteren Ringen gleichen Umfangs und einem mittleren Ring geringfügig geringeren Umfangs auf sowie drei sich dazwischen in Umfangsrichtung liegend U-förmig erstreckende Federarme.

Eine Weiterbildung eines solchen Polsterfederelementes, JP 11 159 552 A, ist an dem mittleren Ring der Feder mit zusätzlichen Kontaktblöcken ausgestattet, an denen die Federarme angeformt sind und die den maximalen Federweg begrenzen.

Aufgabe der Erfindung ist es, die Herstellung eines solchen Federelementes und eines damit ausgestatteten Polsterkissens oder einer Matratze wesentlich wirtschaftlicher zu gestalten und dabei die Federungseigenschaften weiter zu verbessern.

Die Lösung dieser Aufgabe erfolgt erfindungsgemäß dadurch, dass die Auflagerteller rahmen- oder ringförmig ausgebildet sind und die daran angeformte und sich von dort radial nach innen und trichterförmig bis zu einem gemeinsamen Zentrum erstreckende Federarme aufweisen, wobei das gesamte Polsterfederelement aus einem dauerelastischen Kunststoff gefertigt ist, sodass ein ohne weitere Vorbereitungsmaßnahmen verbaubares komplettes Polsterfederelement zur Verfügung gestellt wird, welches zudem sehr leicht und robust ausgeführt ist. Die nach innen gewölbten Federarme werden bei einer Belastung des Polsterfederelementes nicht nur auf Biegung, wie etwa bei einer Blattfeder, beansprucht, sondern das gesamte elastische Material der Federarme wird in unterschiedlichen Bereichen auf Zug, Druck, Biegung und je nach Ausführungsform der Federarme auch auf Torsion beansprucht.

Entsprechend der Erfindung ist das Zentrum des Polsterfederelementes mit einer zu den Auflagertellern parallelen Teilungsebene versehen, entlang derer das Polsterfederelement in ein Federoberteil und ein Federunterteil geteilt ausgeführt ist, wobei jedes Teil einen Zentrumsanteil aufweist, der wiederum Verbindungsmittel besitzt, welche mit den Verbindungsmitteln des anderen Zentrumsanteils so korrespondieren, dass die beiden Federteile miteinander verrastet werden können.

Auf diese Weise können vorteilhaft Polsterfederelemente zur Verfügung gestellt werden, die durch einen Zusammenbau unterschiedlich harter Federteile härtere oder weichere Federkennlinien aufweisen.

Weitere vorteilhafte Ausführungsformen des Gegenstandes der Erfindung ergeben sich mit und in Kombination aus den nachfolgenden Unteransprüchen.

Gemäß einer besonders bevorzugten Ausführungsform des Gegenstandes der Erfindung sind die Federarme streifenförmig ausgebildet, sodass zum einen das Spritzgusswerkzeug zur Herstellung eines solchen Federelementes kostengünstig herstellbar ist und zum anderen übergroße Spannungen in den einzelnen Federarmen aufgrund wachsenden Abstandes von einer neutralen Ebene ausgeschlossen werden können.

Um das Gewicht eines einzelnen Polsterfederelementes wie auch den Materialverbrauch zu reduzieren, ist die Fläche des Auflagertellers bevorzugterweise mit Ausnehmungen versehen, welche seine Funktion als Auflagerteller nicht negativ beeinflussen. Andererseits kann zur Vergrößerung der Auflagerfläche der rahmen- oder ringförmige Auflagerteller mit sich in der Ebene des Auflagertellers radial nach innen und/oder außen erstreckenden Stegen, Bögen oder zusätzlichen Flächen versehen sein.

Falls es gewünscht ist ein solches Polsterfederelement weiter zu versteifen oder aber einen Schutz vor dem Eindringen von anderen Bauteilen eines Polsterkissens oder einer Matratze in die Kontur des Polsterfederelementes zu erhalten, kann dieses zwischen den Auflagertellern mit einer elastischen Mantelkonstruktion versehen sein, die die Federarme und das Zentrum beabstandet umgibt. Über eine unterschiedliche Farb- oder Formgestaltung kann der interessierte Verbraucher über die unterschiedlichen Federeigenschaften informiert werden.

Nachfolgend ist ein Ausführungsbeispiel der Erfindung anhand der Zeichnungen näher beschrieben. Es zeigen:

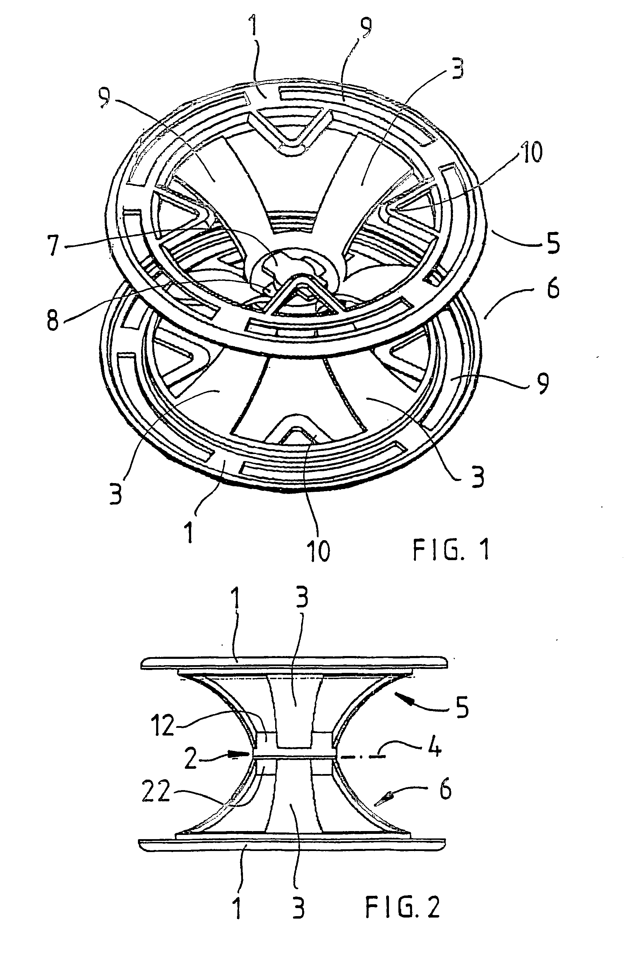

Fig. 1 eine 3-D-Darstellung eines Polsterfederelementes und
Fig. 2 eine Seitenansicht des Polsterfederelementes gemäß Fig. 1.

Das Polsterfederelement besteht aus einem oberen und einem unteren Auflagerteller 1, welcher rahmen- bzw. ringförmig ausgebildet ist und zur Vergrö-βerung der Auflagerfläche sich nach innen erstreckende Stege 10 aufweist. Die Auflagerteller 1 sind mit Ausnehmungen 9 versehen, die der Material- und der Gewichtseinsparung dienen.

Innen sind an den Auflagertellern 1 streifenförmige Federarme 3 angeformt, die sich trichterförmig radial nach innen bis zu einem Zentrum 2 des Polsterfederelementes erstrecken, welches eine Teilungsebene 4 aufweist, welche das Zentrum 2 in einen oberen und einen unteren Zentrumsteil 12;22 aufteilt. Beide Zentrumsteile 12;22 sind mit Verbindungsmitteln 7;8 ausgestattet, die dauerhaft miteinander verrastend die Einheit des Polsterfederelements gewährleisten.

## Patentansprüche

1. Polsterfederelement, insbesondere für Polsterkissen oder Matratzen, mit einem oberen und einem unteren Auflagerteller (1) sowie einem dazwischen angeordneten Federelement, **dadurch gekennzeichnet, dass** die Auflagerteller (1) rahmen- oder ringförmig ausgebildet sind und die daran angeformte und sich von dort radial nach innen und trichterförmig bis zu einem gemeinsamen Zentrum (2) erstreckende Federarme (3) aufweisen, das Polsterfederelement aus einem dauerelastischen Kunststoff gefertigt ist und das Zentrum (2) eine zu den Auflagertellern (1) parallele Teilungsebene (4) aufweist, entlang derer das Polsterfederelement in ein Federoberteil (5) und ein Federunterteil (6) jeweils mit einem Zentrumsanteil (12;22) geteilt ist und dass jeder Zentrumsanteil (12;22) Verbindungsmittel (7;8) aufweist, welche mit den Verbindungsmitteln (8;7) des anderen Zentrumsanteils (22; 12) korrespondieren.

2. Polsterfederelement nach Anspruch 1, **dadurch gekennzeichnet, dass** die Federarme (3) streifenförmig ausgebildet sind.

3. Polsterfederelement nach einem der vorgenannten Ansprüche, **dadurch gekennzeichnet, dass** das Federunterteil (6) und das Federoberteil (5) aus unterschiedlich harten Kunststoffen gefertigt sind.

4. Polsterfederelement nach einem der vorgenannten Ansprüche, **dadurch gekennzeichnet, dass** in der Fläche des Auflagertellers (11) Ausnehmungen (9) zur Material- und Gewichtsersparnis eingeformt sind.

5. Polsterfederelement nach einem der vorgenannten Ansprüche, **dadurch gekennzeichnet, dass** sich von dem rahmen- oder ringförmigen Auflagenteller (1) zur Vergrößerung der Auflagerfläche Auflagerstege (10) und/oder weitere Auflagerflächen in die Ebene des Auflagertellers (1) radial nach innen und/ oder außen erstrecken.

6. Polsterfederelement nach einem der vorgenannten Ansprüche, **dadurch gekennzeichnet, dass** zwischen den Auflagertellern (1) zur weiteren Beeinflussung der Federeigenschaften des Polsterfederelementes eine elastische Mantel-konstruktion eingesetzt ist, die die Federarme (3) und das Zentrum (2) beabstandet umgibt.

## Claims

1. Upholstery spring element, in particular for upholstered cushions or mattresses, having an upper bearing plate (1) and a lower bearing plate (1) and a spring element arranged therebetween, **characterized in that** the bearing plates (1) are of frame-like or annular design and have spring arms (3) which are formed thereon and extend radially inwards, and in a funnel-like manner, from the bearing plates to a common centre (2), the upholstery spring element is produced from a permanently elastic plastics material, and the centre (2) has a parting plane (4), which is parallel to the bearing plates (1) and along which the upholstery spring element is divided into an upper spring part (5) and a lower spring part (6), each with a centre portion (12; 22), and **in that** each centre portion (12; 22) has connecting means (7; 8), which correspond with the connecting means (8; 7) at the other centre (22; 12).

2. Upholstery spring element according to Claim 1, **characterized in that** the spring arms (3) are of strip-like design.

3. Upholstery spring element according to one of the preceding claims, **characterized in that** the lower spring part (6) and the upper spring part (5) are produced from plastics materials of different degrees of hardness.

4. Upholstery spring element according to one of the preceding claims, **characterized in that** the surface of the bearing plate (1) contains cutouts (9) for the purposes of cutting back on materials and saving weight.

5. Upholstery spring element according to one of the preceding claims, **characterized in that**, from the frame-like or annular bearing plates (1), for the purpose of increasing the bearing surface area, bearing cross pieces (10) and/or further bearing surfaces extend radially inwards and/or outwards into the plane of the bearing plate (1).

6. Upholstery spring element according to one of the preceding claims, **characterized in that** an elastic lateral-surface structure, which encloses the spring arms (3) and the centre (2), at a distance therefrom, is inserted between the bearing plates (1) in order to influence the spring properties of the upholstery spring element further.

## Revendications

1. Elément ressort pour rembourrage, notamment pour coussins de rembourrage ou matelas, comprenant une coupelle d'appui (1) supérieure et inférieure, ainsi qu'un élément de ressort disposé entre elles, **caractérisé en ce que** les coupelles d'appui (1) sont réalisées en forme de cadre ou de bague et présentent des bras de ressort (3) formés sur celles-ci, et s'étendant depuis elles radialement vers l'intérieur en forme d'entonnoir jusqu'à un centre commun (2), l'élément de ressort pour rembourrage étant fabriqué à partir d'un plastique élastique durable et le centre (2) présentant un plan de division (4) parallèle aux coupelles d'appui (1), le long duquel l'élément ressort pour rembourrage est divisé en une partie supérieure de ressort (5) et une partie inférieure de ressort (6), à chaque fois avec une proportion de centre (12 ; 22), et **en ce que** chaque proportion de centre (12 ; 22) présente des moyens de liaison (7 ; 8) qui correspondent aux moyens de liaison (8 ; 7) de l'autre proportion de centre (22 ; 12).

2. Elément ressort pour rembourrage selon la revendication 1, **caractérisé en ce que** les bras de ressort (3) sont réalisés en forme de rubans.

3. Elément ressort pour rembourrage selon l'une quelconque des revendications précédentes, **caractérisé en ce que** la partie inférieure de ressort (6) et la partie supérieure de ressort (5) sont fabriquées en plastiques de différentes duretés.

4. Elément ressort pour rembourrage selon l'une quelconque des revendications précédentes, **caractérisé en ce que** des évidements (9) pour économiser du matériau et du poids sont formés dans la surface de la coupelle d'appui (1).

5. Elément ressort pour rembourrage selon l'une quelconque des revendications précédentes, **caractérisé en ce que** des nervures d'appui (10) et/ou d'autres surfaces d'appui s'étendent dans le plan de la coupelle d'appui (1) radialement vers l'intérieur et/ou vers l'extérieur depuis la coupelle d'appui (1) en forme de cadre ou de bague, pour augmenter la surface d'appui.

6. Elément ressort pour rembourrage selon l'une quelconque des revendications précédentes, **caractérisé en ce qu'**entre les coupelles d'appui (1), en vue d'influencer davantage les propriétés de ressort de l'élément ressort pour rembourrage, est insérée une construction d'enveloppe élastique, qui entoure à distance les bras de ressort (3) et le centre (2).
